Europäisches Patentamt

European Patent Office

Office européen des brevets

(11) Publication number: **0 288 830**
**B1**

(12) **EUROPEAN PATENT SPECIFICATION**

(45) Date of publication of the patent specification:
**18.07.90**

(21) Application number: **88105970.3**

(22) Date of filing: **14.04.88**

(51) Int. Cl.⁵: **B26D 1/00, B29C 37/00**

(54) **Web slitter.**

(30) Priority: **24.04.87 JP 62300/87 U**

(43) Date of publication of application:
**02.11.88 Bulletin 88/44**

(45) Publication of the grant of the patent:
**18.07.90 Bulletin 90/29**

(84) Designated Contracting States:
**DE FR GB IT**

(56) References cited:
**JP-A-60 088 176**
**US-A- 3 737 361**
**US-A- 4 534 819**

(73) Proprietor: **YOSHIDA KOGYO K.K., No. 1 Kanda Izumi-cho Chiyoda-ku, Tokyo(JP)**

(72) Inventor: **Masuda, Yuichi, 700-8, Akahama, Namerikawa-Shi Toyama-ken(JP)**

(74) Representative: **Casalonga, Axel et al, BUREAU D.A. CASALONGA - JOSSE Morassistrasse 8, D-8000 München 5(DE)**

ACTORUM AG

## Description

The present invention relates to a web slitter for dividing a web into two or more narrower tape-like strips of web.

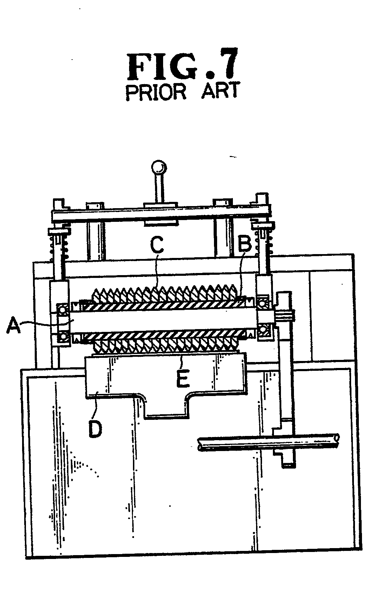

A typical conventional web slitter disclosed in Japanese Patent Laid-open Publication No. 60-88176 includes, as reillustrated here in Figure 7 of the accompanying drawings, a plurality of disc cutters C mounted in close juxtaposition on a drive shaft A with a rubber sleeve B interposed therebetween. The cutters C are forced against a fixed ultrasonic horn D for dividing a web E into narrower tape-like strips of web while melting down a thermoplastic synthetic resin contained in the web 12 as the web E is fed through and between the cutter C and the ultrasonic horn D.

The conventional web slitter thus constructed is disadvantageous in that, due to the justaposed arrangement of cutters, an accurate control of pressure or load applied on individual cutters is difficult to achieve. The cutters are therefore likely to wear away unevenly with the result that strips of web formed by such unevenly worn cutters are inaccurate in dimension and unsightly in appearance. Further, when a web is to be slitted into narrower strips of different widths, a tedious and time-consuming replacement of cutters is required.

With the foregoing difficulties in view, the present invention seeks to provide a web slitter capable of forming a plurality of narrower tape-like strips accurately and stably.

The present invention further seeks to provide a web slitter incorporating structural features which enable formation of narrower strips of different widths without the necessity of a tedious and time-consuming adjustment of cutters.

According to the present invention, there is provided a web slitter including a ultrasonic horn and a plurality of laterally arranged slitting anvils coacting with the ultrasonic horn for dividing a web including a thermoplastic synthetic resin into a plurality of narrower strips of web, characterized in that said slitting anvils are laterally spaced from each other and movable toward and away from said ultrasonic horn independently of each other, and that a plurality of drive mechanisms are operatively connected with said slitting anvils, respectively, for driving the latter.

Since the slitting anvils are movble independently of each other, the pressure or load applied on the respective slitting anvils and hence the extent of abrasive wear of the respective slitting anvils can be controlled accurately. As a result, narrower strips formed by the web slitter are accurate in dimension and sightly in appearance. When the web is to be divided into narrower strips of different widths, selected one or ones of the drive mechanisms are operated to move the corresponding slitting anviles in a direction away from the ultrasonic horn.

Figure 1 is a perspective view of a web slitter embodying the present invention;

Figure 2 is a side view of the web slitter with parts in the operating position;

Figure 3 is a side view of the web slitter with parts in the standby position;

Figure 4 is a fragmentary perspective view of the web slitter illustrative of the manner in which a web is divided into a pluraltiy of narrower strips;

Figure 5 is a vertical cross-sectional view of the web slitter as applied for the formation of loop tapes for a hook-and-loop fastener;

Figure 6 is a view similar to Figure 5, but showing the manner in which strips of different widths are formed from a web; and

Figure 7 is a front elevational view of a conventional web slitter.

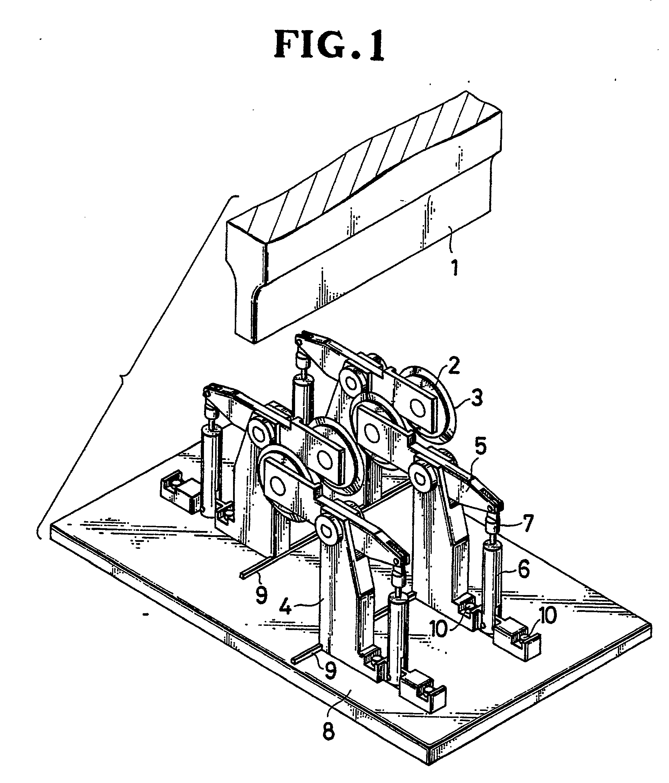

The principles of the present invention are particularly usefull when embodied in a web slitter such as shown in Figure 1. The web sliter is so constructed as to use a ultrasonic energy and a mechnical force for dividing a web into two or more narrower streams or strips of web. To this end, the web to be slit on this web slitter includes a woven or knitted fabric sheet formed solely or partly of a thread of thermoplastic synthetic resin such as polyester, polyethylene or nylon, or a fabric sheet woven or knitted of cotton, jute or the like fiber coated or impregnated with a thermoplastic synthetic resin of the class specified above.

As shown in Figure 1, the web slitter comprises a ultrasonic horn 1 and a plurality of slitting anvils in the form of anvil rollers 2 (four in the illustrated embodiment) disposed below the ultrasonic horn 1 in laterally spaced relation to each other.

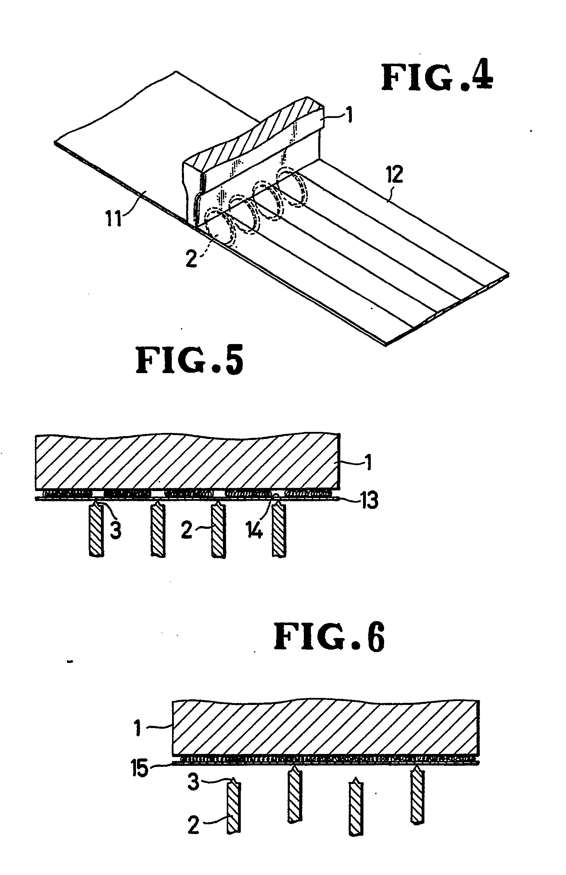

The anvil rollers 2 are arranged in a row extending in a widthwise direction of a web 11 (Figure 4) to be slit on the web slitter. The number of the anvil rollers 2 and the spacing between the anvil rollers 2 are determined by the number and width of strips to be formed from the web 11. Each of the anvil rollers 2 has a peripheral cutting edge 3 engageable with the ultrasonic horn 1. The anvil roller 2 is rotatably mounted on one end of a lever 5 pivotably supported on the upper end of an L-shaped bracket 4. The other end of the lever 5 is pivotaly connected to a piston rod 7 of a fluid cylinder 6 secured to a horizontal arm of the bracket 4. With this construction, the lever 5 is rockingly movable in a vertical plane in response to reciprocating movement of the piston rod 7 when the fluid cylinder 6 is activated and deactivated. The rocking movement of the lever 5 causes the anvil roller 2 to be moved toward and away from the ultrasonic horn 1.

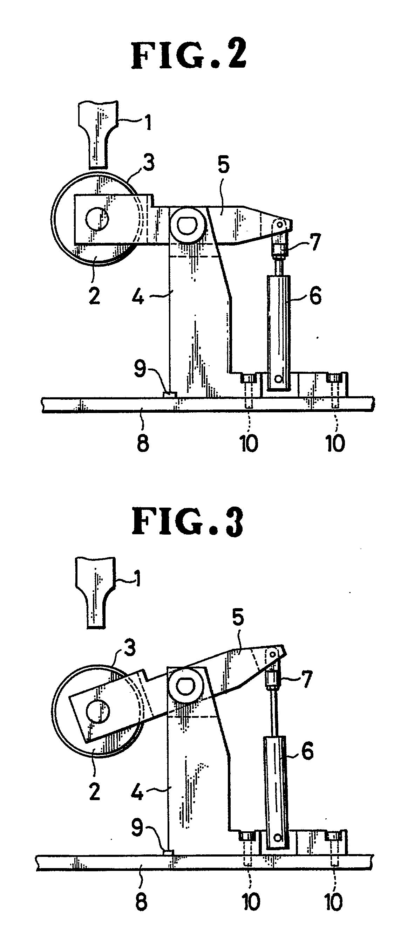

The four brackets 4 are arranged in zig-zag or staggered formation and each of the brackets 4 is mounted on a base 8 by a pair of screws 10, 10 threaded into the base 8 through a pair of oblong holes (not shown), respectively. The oblong holes extend transverse to the direction of feed of a web to be slit so that the brackets 4 are positionally adjustable in a widthwise direction of the web within the longitudinal extent of the oblong holes. The front ends of the respective brackets 4 are slidably guided by two guide rails 9 disposed on the base 8 and extending parallel to the oblong holes. With this arrangement, the brackets 4 can be laterally displaced smoothly and stably, thus enabling an accurate positional adjustment of the anvil rollers 2. When the web 11 is to be divided into narrower strips of different widths, selected one or ones of the fluid cylinders 6 are activated to extend their piston rods 7, thereby causing the corresponding anvil rollers 2 to be moved from an upper operating position shown in Figure 2 to a lower standby position shown in Figure 3.

Figure 4 shows the manner in which the web 11 is divided into four narrower strips 12 of the same width. In this instance, all the anvil rollers 2 are held in their upper operating positions close to the ultrasonic horn 1 as the corresponding fluid cylinders 6 are de-activated to retract their piston rods 7. As the web 11 is fed through and between the ultrasonic horn 1 and the anvil rollers 2, a thermoplastic synthetic resin material of the web 11 is softened and melted down by a ultrasonic energy generated by the ultrasonic horn 1 while at the same time a mechanical force or pressure is applied by the anvil rollers 2 to the web 11. The web 11 is thus divided into the narrower strips 12 of web.

In an embodiment shown in Figure 5, a loop sheet 13 having a plurality of laterally spaced groups of pile loops is slit on the web slitter of the present invention. Tne anvil rollers 2 are disposed in registry with spaces or prospective selvages 14 between the adjacent pile loop groups of the loop sheet 13. Upon operation of the web slitter, the loop sheet 13 is divided into four loop tapes havig selvages. The loop tapes thus produced are used for a hook-and-loop fastener. Figure 6 shows another embodiment in which every other anvil rollers 2 are brought to the lower standby position so that a loop sheet 15 is divided into three loop tapes two of which has a width twice as large as the remaining loop tape.

Obviously, various modifications and variations of the present invention are possible in the light of the above teaching. For instance, the anvil rollers 2 may be replaced by anvil cutters fixedly connected to one ends of the respective levers 5. As a further alternative, all the brackets 4 are arranged in a straight row. It is therefore to be understood that within the scope of the appended claims the invention may be practiced otherwise than as specifically described.

## Claims

1. A web slitter including a ultrasonic horn (1) and a plurality of laterally arranged slitting anvils (2) coacting with the ultrasonic horn (1) for dividing a web (11) including a thermoplastic synthetic resin into a plurality of narrower strips of web, characterized in that said slitting anvils (2) are laterally spaced from each other and movable toward and away from said ultrasonic horn (1) independently of each other, and that a plurality of drive mechanisms (5, 6, 7) are operatively connected with said slitting anvils (2), respectively, for driving the latter.

2. A web slitter according to claim 1, each of said drive mechanisms comprising a pivot lever (5) supporting on one of its opposite ends one of said slitting anvils (2), and a fluid cylinder (6) having a piston rod (7) pivotaly connected to the other end of said pivot lever (5).

3. A web slitter according to claim 2, said slitting anvil (2) comprising an anvil roller (2) rotatably connected to said one end of said pivot lever (5).

4. A web slitter according to claim 1, further including a bracket (4) supporting thereon each of said drive mechanisms (5 - 7) and movable in a widthwise direction of the web to be slit on said web slitter.

5. A web slitter according to claim 4, further including means (9) for guiding said bracket (4) in said widthwise direction.

6. A web slitter according to claim 5, said guide means comprising a guide rail (9) extending in said widthwise direction and guidedly engageable with a part of said bracket (4).

## Patentansprüche

1. Gewebe-Schlitzgerät, umfassend einen Ultraschallgenerator (1) und mehrere nebeneinander angeordnete Schlitzambosse (2), die mit dem Ultraschallgenerator (1) zusammenwirken, um ein einen thermoplastischen Kunststoff enthaltendes Gewebe (11) in mehrere schmälere Bandstreifen zu unterteilen, dadurch gekennzeichnet, daß die Schlitzambosse (2) im seitlichen Abstand voneinander angeordnet und unabhängig voneinander zu dem Ultraschallgenerator (1) hin und von diesem weg bewegbar sind und daß mehrere Antriebsmechanismen (5, 6, 7) mit diesen Schlitzambossen (2) gekuppelt sind, um letztere anzutreiben.

2. Gewebe-Schlitzgerät nach Anspruch 1, wobei jeder Antriebsmechanismus einen Schwenkhebel (5), der an einem seiner gegenüberliegenden Enden einen der besagten Schlitzambosse (2) trägt, und einen Fluidzylinder (6) umfaßt, der eine Kolbenstange (7) hat, die mit dem anderen Ende des besagten Schwenkhebels (5) schwenkbar verbunden ist.

3. Gewebe-Schlitzgerät nach Anspruch 2, wobei der Schlitzamboß (2) eine Amboßrolle (2) umfaßt, die mit dem besagten einen Ende des Schwenkhebels (5) drehbar verbunden ist.

4. Gewebe-Schlitzgerät nach Anspruch 1, ferner umfassend einen Bügel (4), der einen der besagten Antriebsmechanismen (5 bis 7) trägt und in Querrichtung des auf dem Schlitzgerät zu schlitzenden Gewebes bewegbar ist.

5. Gewebe-Schlitzgerät nach Anspruch 4, ferner umfassend Mittel (9) zum Führen des besagten Bügels (4) in der besagten Querrichtung.

6. Gewebe-Schlitzgerät nach Anspruch 5, wobei die Führungsmittel eine Führungsschiene (9) umfassen, die in der besagten Querrichtung verläuft und mit einem Teil des besagten Bügels (4) in Führungseingriff bringbar ist.

## Revendications

1. Dispositif de coupe de tissu, comportant une corne ultrasonique (1) et une pluralité d'enclumes de coupe (2) disposées latéralement, agissant conjointement avec la corne ultrasonique (1) pour diviser un tissu (11) comportant une résine synthétique thermoplastique en une pluralité de bandes de tissu plus étroites, caractérisé en ce que lesdites enclumes de coupe (2) sont espacées latéralement les unes des autres et sont mobiles de façon à se rapprocher et s'éloigner de ladite corne ultrasonique (1), indépendamment les unes des autres, et en ce qu'une pluralité de mécanismes d'entraînement (5, 6, 7) sont connectés de façon opérationnelle auxdites enclumes de coupe (2), respectivement, pour entraîner ces dernières.

2. Dispositif de coupe de tissu selon la revendication 1, chacun desdits mécanismes d'entraînement comportant un levier de pivot (5) supportant sur une de ses extrémités opposées l'une desdites enclumes de coupe (2), et un cylindre de fluide (6) ayant une tige de piston (7) connectée de façon à pouvoir pivoter à l'autre extrémité dudit levier de pivot (5).

3. Dispositif de coupe de tissu selon la revendication 2, ladite enclume de coupe (2) comportant un rouleau d'enclume (2) connecté de façon à pouvoir tourner à ladite première extrémité dudit levier de pivot (5).

4. Dispositif de coupe de tissu selon la revendication 1, comportant de plus une patte (4) supportant sur celle-ci chacun desdits mécanismes d'entraînement (5 à 7) et mobile dans le sens de la largeur du tissu à couper sur ledit dispositif de coupe de tissu.

5. Dispositif de tissu selon la revendication 4, comportant de plus des moyens (9) pour guider ladite patte (4) dans ledit sens de la largeur.

6. Dispositif de coupe de tissu selon la revendication 5, lesdits moyens de guidage comportant une barre de guidage (9) s'étendant dans ledit sens de la largeur et pouvant venir en contact pour la guider avec une partie de ladite patte (4).

# FIG.1

# FIG.2

# FIG.3

**FIG.4**

**FIG.5**

**FIG.6**

# FIG.7
## PRIOR ART